(19) Europäisches Patentamt
European Patent Office
Office européen des brevets

(11) Publication number: 0 156 028
A1

(12) # EUROPEAN PATENT APPLICATION

(21) Application number: 84115907.2

(22) Date of filing: 20.12.84

(51) Int. Cl.[4]: C 08 L 79/08
C 08 L 81/06, C 08 L 55/02

(30) Priority: 29.12.83 US 566661

(43) Date of publication of application:
02.10.85 Bulletin 85/40

(84) Designated Contracting States:
DE FR GB IT NL

(71) Applicant: GENERAL ELECTRIC COMPANY
1 River Road
Schenectady New York 12305(US)

(72) Inventor: Giles, Harold Frazee Jr.
Wilshire Drive
Cheshire Massachusetts 01225(US)

(74) Representative: Schüler, Horst, Dr. et al,
Kaiserstrasse 41
D-6000 Frankfurt/Main 1(DE)

(54) **Blends of acrylonitrile-butadiene-styrene/polysulfone blends with polyetherimides.**

(57) Disclosed are blends of (a) a polyetherimide and (b) an acrylonitrile-butadiene-styrene/polysulfone blend in which the latter ranges from 1 to 99 percent by weight of the composition. Blends of the present invention containing minor amounts of the polyetherimide component show improved flexural and tensile strength, as well as a higher heat distortion temperature, over unmodified acrylonitrile-butadiene-styrene/polysulfone blend. Additionally, blends in which the polyetherimide is the major component show improved impact strengths as compared to the polyetherimide component itself.

EP 0 156 028 A1

0156028
10422.3-08CU-03840
1
General Electric Company

# BLENDS OF ACRYLONITRILE-BUTADIENE-STYRENE/POLYSULFONE BLENDS WITH POLYETHERIMIDES

This invention relates to blends of acrylonitrile-butadiene-styrene/polysulfone blends (ABS-polysulfone) and polyetherimides. These blends exhibit improved heat distortion temperatures and flexural and tensile properties, as compared to the corresponding unmodified ABS-polysulfone polymers.

The blends of the invention include a polyetherimide of the formula:

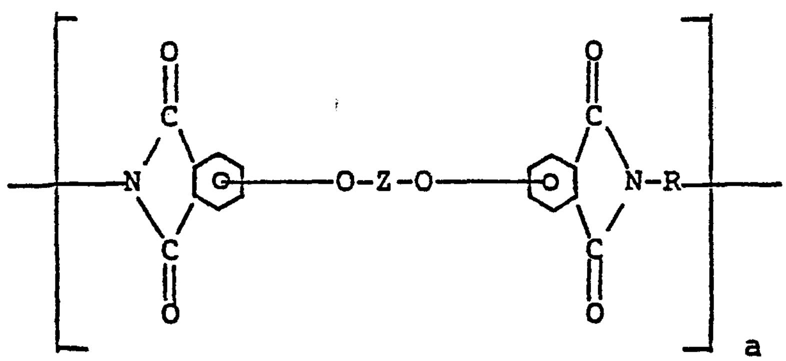

where a represents a whole number in excess of 1, e.g., 10 to 10,000 or more, and the divalent bonds of the -O-Z-O- radical are in the 3,3'; 3,4'; 4,3' or the 4,4' position; Z is a member of the class consisting of (1)

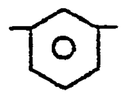 , 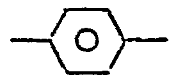 , 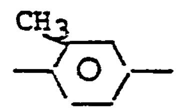 ,

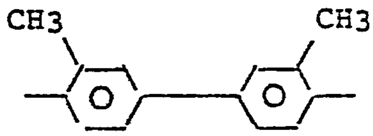 , 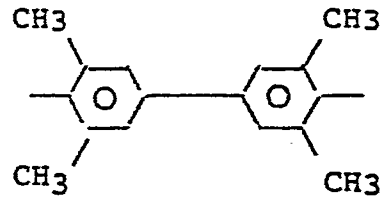

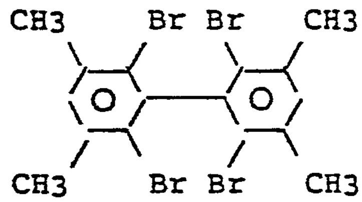 and 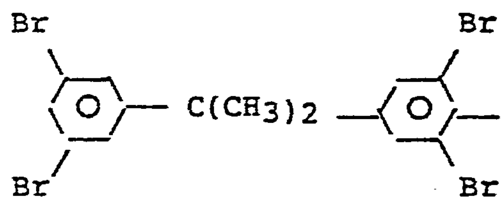

and (2) divalent organic radicals of the general formula:

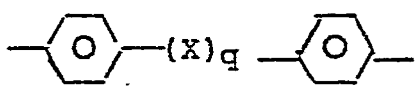

where X is a member selected from the class consisting of divalent radicals of the formulas:

$$-C_yH_{2y}-,\ -\overset{O}{\overset{\|}{C}}-,\ -\underset{\underset{O}{\|}}{\overset{\overset{O}{\|}}{S}}-,\ -O-\ \text{and}\ -S-$$

where q is 0 or 1, y is a whole number from 1 to 5, and R is a divalent organic radical selected from the class consisting of (1) aromatic hydrocarbon radicals having from 6 to about 20 carbon atoms and halogenated derivatives thereof, (2) alkylene radicals and cycloalkylene radicals having from 2 to about 20 carbon atoms, $C_{(2-8)}$ alkylene terminated polydiorganosiloxanes, and (3) divalent radicals included by the formula

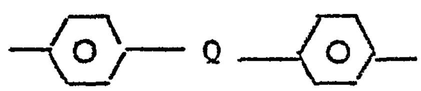

where Q is a member selected from the class consisting of

$$-O-,\ -\overset{O}{\overset{\|}{C}}-,\ -\underset{\underset{O}{\|}}{\overset{\overset{O}{\|}}{S}}-,\ -S-,\ \text{and}\ C_xH_{2x}-,$$

x is a whole number from 1 to about 5 inclusive.

Particularly preferred polyetherimides for the purposes of the present invention include those in which R is selected from:

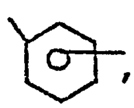,

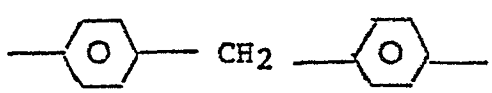

and

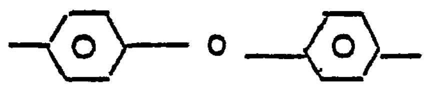

The polyetherimides where R is metaphenylene are most preferred.

The polyetherimides employed in the blends of the present invention may be prepared by reacting an aromatic bis(ether anhydride) of the formula

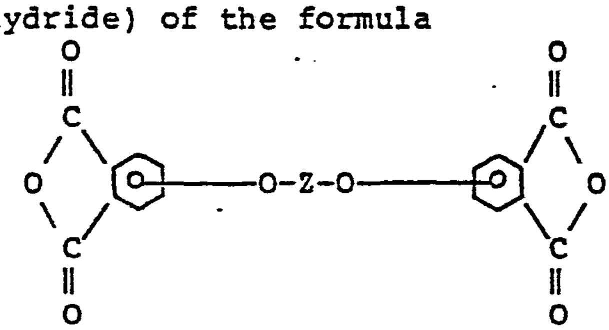

where Z is as defined hereinbefore with an organic diamine of the formula

H2N-R-NH2

where R is as defined hereinbefore.

Aromatic bis(ether anhydride)s of the above formula include, for example, 2-bis[4-(2,3-dicarboxyphenoxy)phenyl]-propane dianhydride; 4,4'-bis(2,3-dicarboxyphenoxy)diphenyl ether dianhydride; 1,3-bis(2,3-dicarboxyphenoxy)benzene dianhydride; 4,4'-bis(2,3-dicarboxyphenoxy)benzene dianhydride; 4,4'-bis(2,3-dicarboxyphenoxy)benzophenone dianhydride; 4,4'-bis(2,3-dicarboxyphenoxy)diphenyl sulfone dianhydride; 2,2-bis[4-(3,4-dicarboxyphenoxy)phenyl]propane dianhydride; 4,4'-bis(3,4-dicarboxyphenoxy)diphenyl ether dianhydride; 4,4'-bis(3,4-dicarboxyphenoxy)diphenyl sulfide dianhydride; 1,3-bis(3,4-dicarboxyphenoxy)benzene dianhydride; 1,4-bis(3,4-dicarboxyphenoxy)benzene dianhydride; 4,4'-bis(3,4-dicarboxyphenoxy)benzophenone dianhydride; 4-(2,3-dicarboxyphenoxy)-4'-(3,4-dicarboxyphenoxy)diphenyl-2,2-propane dianhydride; etc. and mixtures of such dianhydrides.

In addition, aromatic bis(ether anhydride)s included in the above formulas are shown by Koton, M.M.; Florinski, F.S.; Bessonov, M.I.; Rudakov, A.P. (Institute of Heteroorganic Compounds, Academy of Sciences, U.S.S.R.), U.S.S.R. 257,010, Nov. 11, 1969, May 3, 1967. In addition, dianhydrides are shown by M.M. Koton, F.S. Florinski, Zh. Org. Khin, 4(5), 774 (1968).

Organic diamines of the above formulas include, for example, m-phenylenediamine, p-phenylenediamine, 4,4'-diaminodiphenylpropane, 4,4'-diaminodiphenylmethane, benzidine, 4,4'-diaminodiphenyl sulfide, 4,4'-diaminodiphenyl sulfone, 4,4'-diaminodiphenyl ether, 1,5-diaminonaphthalene, 3,3'-dimethylbenzidine, 3,3'-dimethoxybenzidine, 2,4-bis(β-amino-t-butyl)toluene, bis(p-β-amino-t-butylphenyl)ether, bis(p-β-methyl-o-aminopentyl)benzene, 1,3-diaminotoluene, 2,6-diaminotoluene, bis(4-aminocyclohexyl)methane, 3-methylheptamethylenediamine, 4,4-dimethylheptamethylenediamine, 2,11-dodecanediamine, 2,2-dimethylpropylenediamine, octamethylenediamine, 3-methoxyhexamethylenediamine, 2,5-dimethylhexamethylenediamine, 2,5-dimethylheptamethylenediamine, 3-methylheptamethylenediamine, 5-methylnonamethylenediamine, 1,4-cyclohexanediamine, 1,12-octadecanediamine, bis(3-aminopropyl)sulfide, N-methyl-bis(3-aminopropyl)amine, hexamethylenediamine, heptamethylenediamine, nonamethylenediamine, decamethylenediamine, bis(3-aminopropyl)tetramethyldisiloxane, bis(4-aminobutyl)tetramethyldisiloxane, etc.

In general, the reactions can be advantageously carried out employing well-known solvents, e.g., o-dichlorobenzene, m-cresol/toluene, etc. in which to effect interaction between the dianhydrides and the diamines, at temperatures of from about 100°C to about 250°C. Alternatively, the polyetherimides can be prepared by melt polymerization of any of the above dianhydrides with any of the above diamino compounds while heating the mixture of the ingredients at elevated temperatures with concurrent intermixing. Generally, melt polymerization temperatures between about 200°C to 400°C. and preferably 230°C to 300°C. can be employed. The conditions of the reaction and the proportions of ingredients can be varied widely depending on the desired molecular weight, intrinsic viscosity, and solvent resistance. In general, equimolar amounts of diamine and dianhydride are employed for high molecular weight polyetherimides, however, in certain instances, a slight molar excess (about 1 to 5 mole percent) of diamine can be employed resulting in the production of polyetherimides having terminal amine groups. Generally, useful polyetherimides have an intrinsic viscosity greater than 0.2 deciliters per gram, preferably 0.35 to 0.60, or 0.7 deciliters per gram or even higher when measured in m-cresol at 25°C.

Included in the many methods of making the polyetherimides are those disclosed in U.S. Patent to Heath et al. 3,847,867, Williams 3,847,869, Takekoshi et al. 3,850,885, White 3,852,242 and 3,855,178, etc. These disclosures are incorporated herein in their entirety by reference for the purpose of teaching, by way of illustration, general and specific methods for preparing polyetherimides suitable for the blends of this invention.

The ABS-polysulfone component of the present novel blends is a blend of a thermoplastic polysulfone plastic and an acrylonitrile-butadiene-styrene (ABS) plastic.

The ABS plastic is a copolymer prepared by graft copolymerizing resin-forming monomers, namely, styrene and acrylonitrile, on a previously prepared polybutadiene rubber spine, or a butadiene-styrene copolymer rubber spine; in the final graft copolymer the resinous portion and the rubbery portion are believed to be in large part chemically combined.

Since the ABS material has both a rubbery component (e.g., polybutadiene or butadiene-styrene spine or butadiene-acrylonitrile copolymer component) and a resinous component (styrene-acrylonitrile), it may therefore be regarded as a "gum plastic" type of material. Usually the proportion of the rubbery component in the ABS is from 5 to 35%, while the proportion of resin is correspondingly from 95 to 65%. The overall proportion of acrylonitrile, butadiene and styrene usually falls within the ranges: 10 to 40% acrylonitrile; 5 to 65% butadiene; and 25 to 85% styrene.

The second component of the ABS-polysulfone is a polysulfone resin component which may be described as a polyarylene polyether polysulfone, which is a linear thermoplastic reaction product of an alkali metal double salt of a dihydric phenol and a dihalobenzenoic compound, either or both of which contain a sulfone linkage $-SO_2-$ between arylene groupings, to provide sulfone units in the polymer chain in addition to arylene units and ether units. Such polysulfones are included within the class of polyarylene polyether resins described in U.S. Pat. 3,264,536, Robinson et al., Aug. 2, 1966, the disclosure of which is hereby incorporated herein by reference.

These ABS-polysulfone and methods for their preparation are described for example by Inguili et al., U.S. Patent 3,555,119, which is incorporated herein by reference. A preferred ABS-polysulfone for use in the blends of this invention is commercially available from

U.S.S. Chemicals Co., Pittsburgh, Pennsylvania, under the trademark, Arylon®T.

Any proportion of polyetherimide can be employed, and the above-mentioned improvements in physical properties are generally observed in the entire range of polyetherimide concentrations. Thus, modified ABS-polysulfones containing from about 1% to about 99% by weight polyetherimide (based on the weight of the ABS-polysulfone-polyetherimide blend) are included within the present invention. For economic reasons, blends containing less than about 50% by weight polyetherimides are generally preferred. Particularly preferred blends contain from about 5% by weight to about 30% by weight polyetherimide.

It has also surprisingly been found that impact strengths can be improved over those of either the ABS-polysulfone or polyetherimides alone. Such improved impact strengths are observed over a relatively narrow range of concentrations, wherein the ratio of ABS-polysulfone to polyetherimide is from about 1:99 by wt. to about 7:93 by wt.

The blends of this invention can be made simply by mixing the solid components and extruding them at elevated temperatures. Extrusion temperatures in excess of the glass transition temperatures of each of the components are typically employed. Such temperatures can range from about 310°C to about 330°C. The blends of the present invention may be injection molded at temperatures of about 315°C and mold temperatures of about 80°C.

## Example

Several samples of polyetherimide and ABS-polysulfone were blended and extruded. For samples 1, 2 and 8, the extruder profile was set at 332/332/330/327/327°C with the die temperature at 327°C. For samples 3, 4, 5, 6 and 7, the extruder profile was

set at 316/321/316/313/310°C., with the die temperature at 310°C. The extrudates were chopped into pellets and subsequently injection molded at 316°C and subjected to a series of tests as indicated by the following chart.

| Extrudate Sample | Composition Percentage Polyetherimide | Percentage ABS-Polysulfone | Izod Impact ft. lbs/in. (J/M), 0.125"bar Notched | Unnotched | HDT°C. @ 264 psi |
|---|---|---|---|---|---|
| 1. | 95 | 5 | 0.91(50) | 24.5(1310) | 189 |
| 2. | 90 | 10 | 0.81(42) | 18.4(981) | 188 |
| 3. | 70 | 30 | 0.7(37) | 5.2(280) | 172 |
| 4. | 50 | 50 | 0.6(31) | 7.6(404) | 158 |
| 5. | 30 | 70 | 0.4(20) | 7.8(416) | 124 |
| 6. | 10 | 90 | 0.4(20) | 8.0(430) | 110 |
| 7. | 0 | 100 | 1.3(68) | No Break | 113 |
| 8. | 100 | 0 | 1.0(52) | 23.9(1270) | 196 |

Continued

| Gardner Impact in lbs. (J), 0.125" plaque, 0.625" tup | Flexural Properties | | | |
|---|---|---|---|---|
| | Initial Mod. psi x $10^5$ (GPa) | Stress @ 5% Strain psi x $10^4$ (MPa) | Ultimate Stress psi x $10^4$ (MPa) | Strain at Ultimate Stress Percentage |
| 10.3 | 4.81(3.32) | 2.00(138) | 2.31(159) | 7.9 |
| 2.5 | 4.89(3.37) | 2.03(140) | 2.33(160) | 7.6 |
| 6.9 | 4.69(3.23) | 1.96(134) | 2.01(139) | 6.3 |
| 7.0 | 4.29(2.96) | 1.79(123) | 1.82(125) | 5.8 |
| 12 | 4.07(2.80) | 1.61(111) | 1.67(115) | 6.5 |
| 13.3 | 3.83(2.64) | 1.45(99.9) | 1.48(102) | 6.1 |
| 43.3 | 3.68(2.54) | 1.37(94.7) | 1.39(96.4) | 6.2 |
| 69.5 | 4.83(3.30) | 2.08(143) | 2.36(163) | 7.6 |

Continued

| Tensile Properties | | | | |
|---|---|---|---|---|
| Modulus | Yield | | Failure | |
| psi x $10^5$ (GPa) | Percentage | psi x $10^4$ (MPa) | Percentage | psi x $10^4$ (MPa) |
| 4.55(3.13) | 7.0 | 1.51(104) | 26.9 | 1.31(90.3) |
| 4.65(3.208) | 6.7 | 1.44(99.4) | 30.3 | 1.17(80.6) |
| 4.44(3.06) | 3.5 | 1.13(77.6) | 3.8 | 1.13(77.6) |
| 4.22(2.91) | 4.3 | 1.09(75.3) | 4.4 | 1.09(75.3) |
| 3.97(2.74) | 4.7 | 9.63(66.4) | 4.6 | 0.962(66.3) |
| 3.61(2.49) | 4.4 | 8.65(59.6) | 5.5 | 0.846(58.3) |
| 3.35(2.31) | 4.6 | 7.99(55.1) | 24 | 0.648(44.6) |
| 4.47(3.081) | 7.1 | 1.51(104) | 27.2 | 1.21(83.0) |

IT IS CLAIMED:

1. A composition which is a blend comprising (a) 1 to 99 parts polyetherimide and (b) 99 to 1 parts acrylonitrile-butadiene-styrene-polysulfone.

2. A composition in accordance with claim 1, which comprises (a) about 90 to 95 parts polyetherimide and (b) 10 to 15 parts acrylonitrile-butadiene-styrene-polysulfone.

3. A composition in accordance with claims 1 or 2, wherein the polyetherimide has the formula:

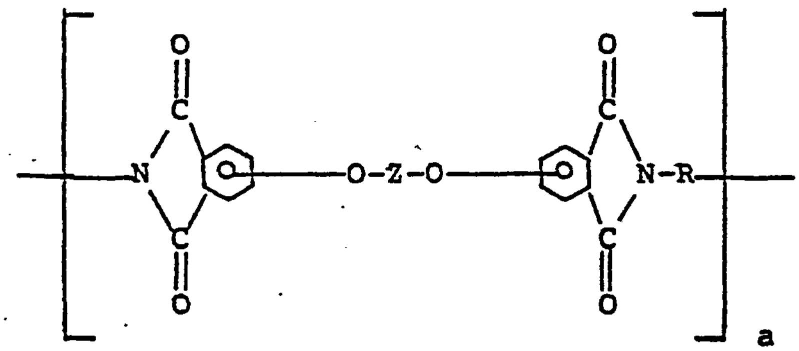

wherein a represents a whole number in excess of 1, e.g., 10 to 10,000 or more, and the divalent bonds of the-O-Z-O-radical are in the 3,3'; 3,4'; 4,3'; or 4,4' position; and Z is a member of the class consisting of (1)

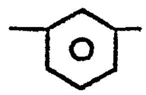, 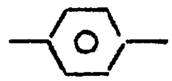, 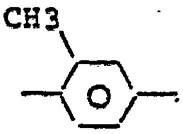,

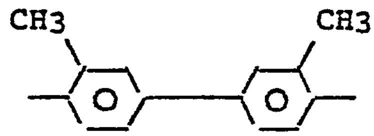, 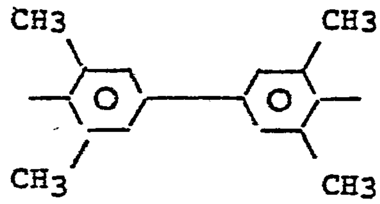

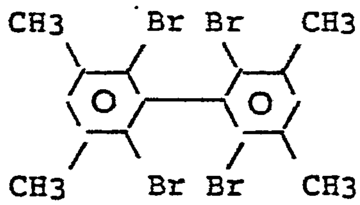 and 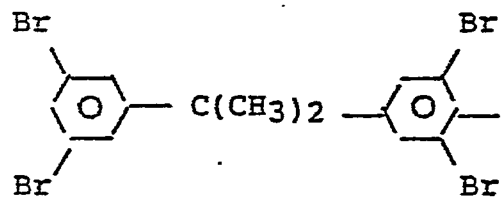

and (2) divalent organic radicals of the general formula:

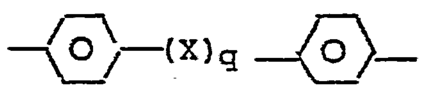

where X is a member selected from the class consisting of divalent radicals of the formulas:

$$-C_yH_{2y}-,\ -\overset{O}{\overset{\|}{C}}-,\ -\underset{\underset{O}{\|}}{\overset{\overset{O}{\|}}{S}}-,\ -O-\ \text{and}\ -S-$$

where q is 0 or 1, y is a whole number from 1 to 5, and R is a divalent organic radical selected from the class consisting of (1) aromatic hydrocarbon radicals having from 6-10 carbon atoms and halogenated derivatives thereof, (2) alkylene radicals and cycloalkylene radicals having from 2-20 carbon atoms, $C_{(2-8)}$ alkylene terminated polydiorganosiloxane, and (3) divalent radicals included by the formula:

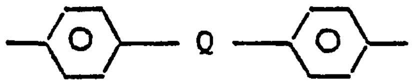

where Q is a member selected from the class consisting of

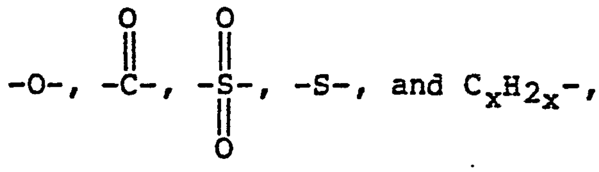

where x is a whole number from 1 to 5 inclusive.

4. A composition in accordance with claim 3 wherein the polyetherimide is of the formula:

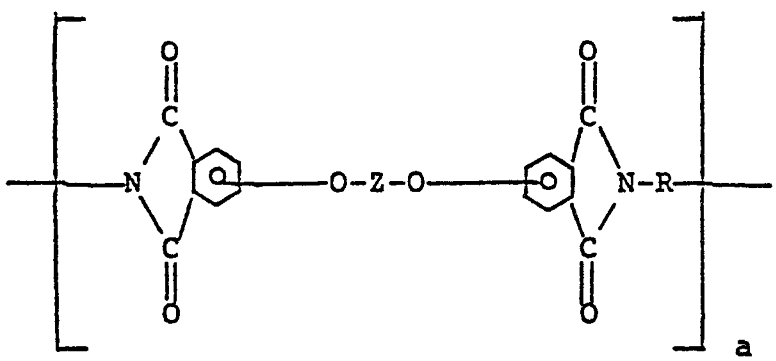

and the divalent bonds of the -O-Z-O- radical are in the 3,3'; 3,4'; 4,3' or the 4,4' position.

5. A composition in accordance with claim 4 wherein Z is:

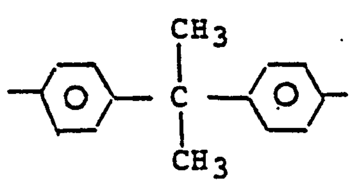

and R is selected from:

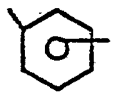,
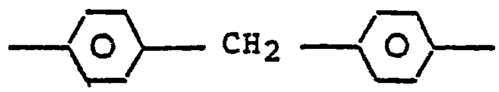

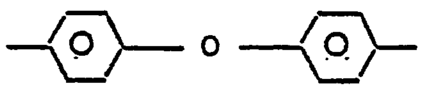

6. A composition in accordance with claim 5 wherein the polyetherimide is of the formula:

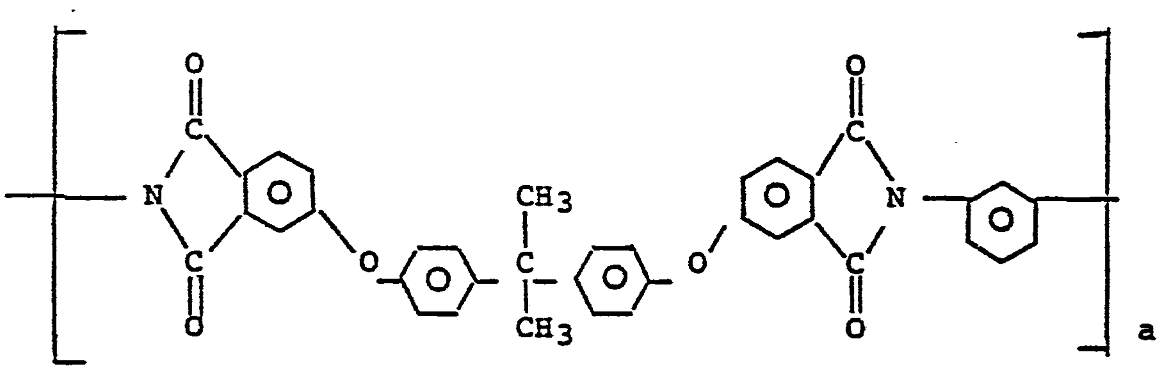

European Patent Office

# EUROPEAN SEARCH REPORT

0156028

Application number

EP 84 11 5907

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| A | US-A-4 393 168 (H.F.GILES)<br>--- | | C 08 L 79/08<br>C 08 L 81/06<br>C 08 L 55/02 |
| A | EP-A-0 091 117 (GENERAL ELECTRIC)<br>----- | | |
| | | | TECHNICAL FIELDS SEARCHED (Int. Cl.4) |
| | | | C 08 L |

The present search report has been drawn up for all claims

| Place of search | Date of completion of the search | Examiner |
|---|---|---|
| THE HAGUE | 20-06-1985 | LEROY ALAIN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document